(19)

Europäisches
Patentamt
European
Patent Office
Office européen
des brevets

(11) **EP 2 557 550 A1**

(12) **EUROPEAN PATENT APPLICATION**
published in accordance with Art. 153(4) EPC

(43) Date of publication:
**13.02.2013 Bulletin 2013/07**

(21) Application number: **11765172.9**

(22) Date of filing: **26.01.2011**

(51) Int Cl.:
*G08G 1/16* (2006.01)      *G06T 1/00* (2006.01)
*H04N 7/18* (2006.01)

(86) International application number:
**PCT/JP2011/000416**

(87) International publication number:
**WO 2011/125270 (13.10.2011 Gazette 2011/41)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **08.04.2010 JP 2010089344**

(71) Applicant: **Kabushiki Kaisha Toshiba
Minato-ku
Tokyo 105-8001 (JP)**

(72) Inventor: **FURUKAWA, Kenji
Tokyo (JP)**

(74) Representative: **HOFFMANN EITLE
Patent- und Rechtsanwälte
Arabellastrasse 4
81925 München (DE)**

(54) **VEHICLE PERIPHERY MONITORING DEVICE, VEHICLE PERIPHERY MONITORING METHOD, AND VEHICLE DEVICE**

(57)      A vehicle periphery monitoring device including a first data acquisition unit that acquires first frame image data imaged by a first imaging unit imaging a first region containing a rear side, a second data acquisition unit that acquires second frame image data imaged by a second imaging unit imaging a second region containing the rear side and different from the first region, and an obstacle estimation processing unit that performs first obstacle estimation processing that estimates a first obstacle present in the first region based on the first frame image data, second obstacle estimation processing that estimates a second obstacle present in the second region based on the second frame image data, and signal output processing that outputs a signal based on at least one of a result of the first obstacle estimation processing and a result of the second obstacle estimation processing, wherein conditions for the second obstacle estimation processing are changed based on the result of the first obstacle estimation processing.

FIG. 1

EP 2 557 550 A1

**Description**

CROSS-REFERENCE TO RELATED APPLICATIONS

This application is based upon and claims the benefit of priority from Japanese Patent Application No. 2010-89344 filed on April 08, 2010 in Japan, the entire contents of which are incorporated herein by reference.

BACKGROUND OF THE INVENTION

1. Field of the Invention

Embodiments described herein relate generally to a vehicle periphery monitoring device, a vehicle periphery monitoring method, and a vehicle device.

2. Description of Related Art

Vehicle periphery monitoring devices that detect other vehicles approaching the local vehicle based on video acquired by a vehicle-mounted camera and give a warning to the driver have been developed.
For example, an obstacle detection device that detects obstacles by a unit for accumulating evaluation values and one TV camera is disclosed. Accordingly, obstacles such as other vehicles approaching the local vehicle can be detected.
However, there is scope for improvement to be able to detect obstacles such as other vehicles approaching the local vehicle at high speed in a shorter time.

Citation List

Patent Literature

Patent Literature 1: Japanese Patent Application Laid-Open No. 2004-246436

BRIEF DESCRIPTION OF DRAWINGS

FIG. 1 is a schematic diagram illustrating a condition of use of a vehicle periphery monitoring device according to a first embodiment;
FIG. 2 is a schematic diagram illustrating a configuration of the vehicle periphery monitoring device according to the first embodiment;
FIG. 3 is a flow chart illustrating an operation of the vehicle periphery monitoring device according to the first embodiment;
FIG. 4 is a flow chart illustrating a concrete example of the operation of the vehicle periphery monitoring device according to the first embodiment;
FIG. 5 is a flow chart illustrating a concrete example of the operation of the vehicle periphery monitoring device according to a second embodiment;
FIG. 6 is a flow chart illustrating a concrete example of the operation of the vehicle periphery monitoring device according to a third embodiment;
FIG. 7 is a schematic diagram illustrating the condition of use of the vehicle periphery monitoring device according to a fourth embodiment; and
FIG. 8 is a flow chart illustrating a vehicle periphery monitoring method according to a fifth embodiment.

DETAILED DESCRIPTION OF EMBODIMENTS

An embodiment provides a vehicle periphery monitoring device and a vehicle periphery monitoring method that detect obstacles in a short time.
According to an embodiment, a vehicle periphery monitoring device mounted on a vehicle to detect an obstacle in a periphery of the vehicle is provided. The vehicle periphery monitoring device includes a first data acquisition unit, a second data acquisition unit, and an obstacle estimation processing unit. The first data acquisition unit acquires a plurality of pieces of first frame image data in a time series imaged by a first imaging unit imaging a first region containing a rear side of the vehicle. The second data acquisition unit acquires a plurality of pieces of second frame image data in the time series imaged by a second imaging unit imaging a second region containing the rear side of the vehicle and different from the first region. The obstacle estimation processing unit that performs first obstacle estimation processing that estimates a first obstacle present in the first region based on the plurality of pieces of first frame image data acquired by the first data acquisition unit, second obstacle estimation processing that estimates a second obstacle present in the second region based on the plurality of pieces of second frame image data acquired by the second data acquisition unit, and signal output processing that outputs a signal based on at least one of a result of the first obstacle estimation processing and a result of the second obstacle estimation processing. Conditions for the second obstacle estimation processing are changed based on the result of the first obstacle estimation processing.

According to another embodiment, a vehicle periphery monitoring method including acquiring a plurality of pieces of first frame image data in a time series imaged by a first imaging unit imaging a first region containing a rear side of the vehicle, acquiring a plurality of pieces of second frame image data in the time series imaged by a second imaging unit imaging a second region containing the rear side of the vehicle and different from the first region, estimating a first obstacle present in the first region based on the plurality of pieces of first frame image data, and estimating a second obstacle present in the second region based on the plurality of pieces of second frame image data by using conditions changed based on estimation of the first obstacle.

Each embodiment of the present invention will be described below with reference to the drawings. In the present specification and each drawing, the same reference numerals are attached to similar elements described about drawings that have appeared and a detailed description thereof is omitted when appropriate.

(First embodiment)

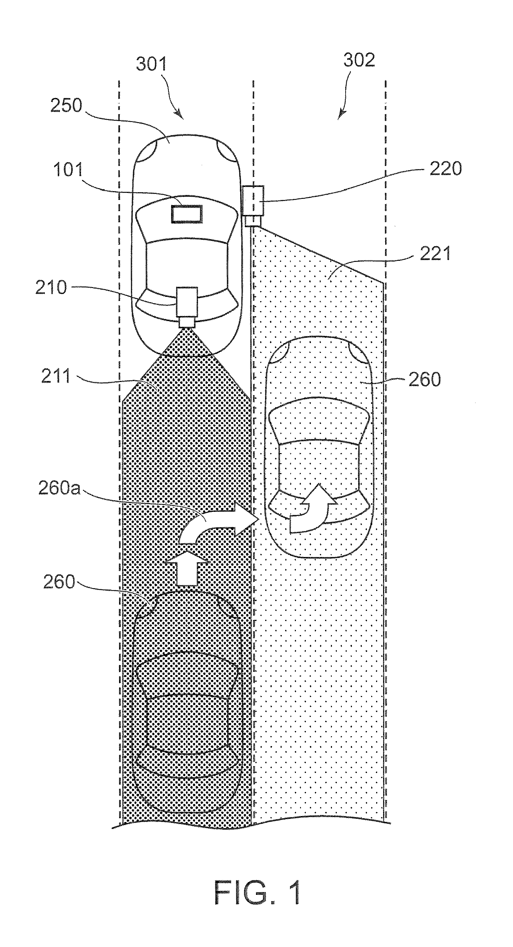

FIG. 1 is a schematic diagram illustrating a condition of use of a vehicle periphery monitoring device according to the first embodiment.

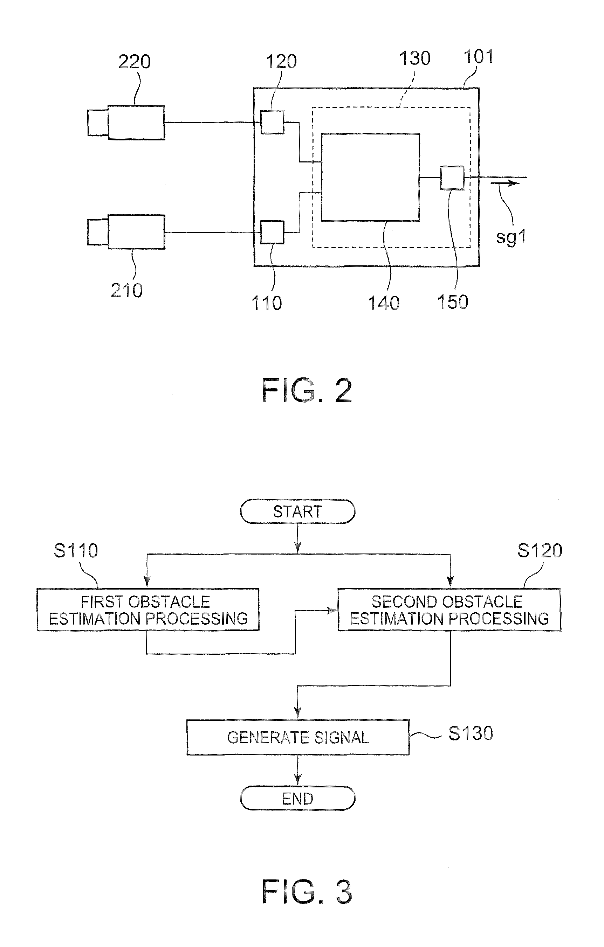

FIG. 2 is a schematic diagram illustrating a configuration of the vehicle periphery monitoring device according to the first embodiment.
FIG. 3 is a flow chart illustrating an operation of the vehicle periphery monitoring device according to the first embodiment.

As shown in FIG. 1, a vehicle periphery monitoring device 101 according to the present embodiment is mounted on a vehicle (local vehicle 250) to detect any obstacle in the periphery of the vehicle (local vehicle 250).

As shown in FIG. 2, the vehicle periphery monitoring device 101 includes a first data acquisition unit 110, a second data acquisition unit 120, and an obstacle estimation processing unit 130.

As shown in FIGS. 1 and 2, the first data acquisition unit 110 acquires a plurality of pieces of first frame image data in a time series captured by a first imaging unit 210 imaging a first region 211 including a rear side of the vehicle (local vehicle 250).

The second data acquisition unit 120 acquires a plurality of pieces of second frame image data in a time series captured by a second imaging unit 220 imaging a second region 221 including the rear side of the vehicle (local vehicle 250) and different from the first region 211.

Incidentally, a portion of the first region 211 and a portion of the second region 221 may be the same region. That is, the first region 211 and the second region 221 may contain mutually the same region. It is only necessary that the first region 211 as a whole and the second region 221 as a whole do not match and the first region 211 and the second region 221 are considered to be mutually different even if a portion of the first region 211 and a portion of the second region 221 are the same region.

As shown in FIG. 1, the first region 211 contains at least a portion of the rear of the local vehicle 250 on which the vehicle periphery monitoring device 101 is mounted. That is, for example, the first region 211 can contain at least a portion of a travel lane 301 (local lane) on which the local vehicle 250 is running.

The second region 221 contains, for example, at least a portion of the rear lateral of the local vehicle 250. That is, for example, the second region 221 can contain at least a portion of an adjacent lane 302 adjacent to the travel lane 301 (local lane) on which the local vehicle 250 is running.

However, the embodiments of the present invention are not limited to such an example and the first region 211 and the second region 221 may contain any region if a region on the rear side of the local vehicle 250 is contained. It is assumed below that the first region 211 contains the rear (for example, the travel lane 301) of the local vehicle 250 and the second region 221 contains the rear lateral (for example, the travel lane 302) of the local vehicle 250.

That is, the first imaging unit 210 captures a rear image when viewed from the local vehicle 250 on the travel lane 301 and the second imaging unit 220 captures a rear lateral image when viewed from the local vehicle 250 on the adjacent travel lane 302. The imaging range of the first imaging unit 210 contains the travel lane 301 of the local vehicle 250. The imaging range of the second imaging unit 220 contains the adjacent travel lane 302 of the local vehicle 250.

In this case, as shown in FIG. 1, the first imaging unit 210 may be mounted in the rear of the local vehicle 250 to capture a rear image of the vehicle and the second imaging unit 220 may be mounted on the lateral of the local vehicle 250 to capture a rear lateral image of the vehicle.

As shown in FIG. 3, the obstacle estimation processing unit 130 performs first obstacle estimation processing (step S110), second obstacle estimation processing (step S120), and signal output processing (step S130).

The first obstacle estimation processing contains processing to estimate a first obstacle present in the first region 211 based on a plurality of pieces of first frame image data acquired by the first data acquisition unit 110.

For example, the first obstacle estimation processing contains processing to estimate the first obstacle present in the first region 211 based on a result of comparison of a first cumulative value obtained by accumulating an evaluation value (first evaluation value) concerning an obstacle in each of the plurality of pieces of first frame image data acquired by the first data acquisition unit 110 for each of the plurality of pieces of first frame image data by using first accumulation conditions and a first reference value.

The second obstacle estimation processing contains processing to estimate a second obstacle present in the second region 221 based on a plurality of pieces of second frame image data acquired by the second data acquisition unit 120.

For example, the second obstacle estimation processing contains processing to estimate the second obstacle present in the second region 221 based on a result of comparison of a second cumulative value obtained by accumulating an evaluation value (second evaluation value) concerning an obstacle in each of the plurality of pieces of second frame image data acquired by the second data acquisition unit 120 for each of the plurality of pieces of second frame image data by using second accumulation conditions and a second reference value.

The signal output processing contains processing to output a signal sg1 based on at least one of a result of the first obstacle estimation processing and a result of the second obstacle estimation processing.

The signal sg1 is, for example, a signal to notify the driver of the local vehicle 250 of an obstacle detected (estimated) by the vehicle periphery monitoring device 101 and present in the periphery of the local vehicle 250. Accordingly, the driver of the local vehicle 250 can know another vehicle 260 as an obstacle present in the periphery (for example, in the rear or rear lateral of the local vehicle 250) of the local vehicle 250. That is, the signal sg1 can be regarded as a warning signaling the approach of an obstacle.

The warning can include, for example, at least one of a sound signal and optical signal. These warnings may be generated, for example, based on the signal sg1 or the signal sg1 itself may be a warning. When these warnings are generated based on the signal sg1, a warning generator that generates a warning based on the signal sg1 may be provided and the warning generator may be contained in the vehicle periphery monitoring device 101 or provided separately from the vehicle periphery monitoring device 101.

A sound signal as a warning may include a sound generated by a sound generator such as a speaker, chime, or buzzer mounted on the local vehicle 250. An optical signal as a warning may include lighting of a lamp and changes of light by a display device such as a display. Alternatively, a combination of a sound signal and optical signal may be used as a warning. The extent of the warning (for example, a sound or light) can be set to increase with the passage of time. Accordingly, the driver can be notified of the presence of an obstacle and the extent of approach more effectively.

In the vehicle periphery monitoring device 101 according to the present embodiment, conditions for the second obstacle estimation processing are changed based on a result of the first obstacle estimation processing.

For example, at least one of the second accumulation conditions and the second reference value described above is changed based on a result of the first obstacle estimation processing. That is, the second obstacle present in the second region 221 in the second obstacle estimation processing is estimated based on a result of comparison of the second cumulative value obtained by accumulating an evaluation value concerning an obstacle in each of a plurality of pieces of second frame image data for each of the plurality of pieces of second frame image data by using the second accumulation conditions and the second reference value and the above conditions for the second obstacle estimation processing changed based on a result of the first obstacle estimation processing can contain at least one of the second accumulation conditions and the second reference value.

Accordingly, an obstacle can be detected in a short time.

In the above description, the first region 211 and the second region 221 can be interchanged. In addition, the first imaging unit 210 and the second imaging unit 220 can be interchanged.

Further, the first data acquisition unit 110 and the second data acquisition unit 120 can be interchanged.

In the present concrete example, as shown in FIG. 2, the obstacle estimation processing unit 130 includes a processing unit 140 and a signal generator 150. The processing unit 140 performs the above first obstacle estimation processing and the above second obstacle estimation processing. The signal generator 150 performs the above signal output processing. That is, the signal generator 150 outputs the signal sg1 based on at least one of a result of the first obstacle estimation processing and a result of the second obstacle estimation processing.

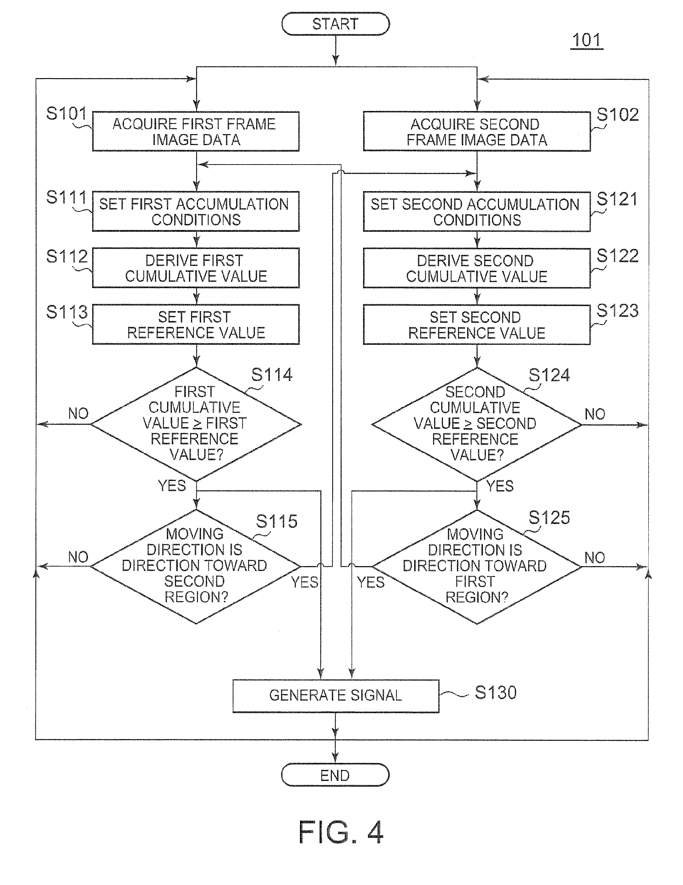

FIG. 4 is a flow chart illustrating a concrete example of the operation of the vehicle periphery monitoring device according to the first embodiment.

In the vehicle periphery monitoring device 101, as shown in FIG. 4, a plurality of pieces of first frame image data in a time series captured by the first imaging unit 210 is first acquired (step S101) . The acquisition of the first frame image data is carried out by the first data acquisition unit 110 . The plurality of pieces of first frame image data includes images in a time series containing the first region 211.

Then, for example, first accumulation conditions described later are set (step S111).

Then, a first cumulative value is derived by accumulating an evaluation value (first evaluation value) concerning an obstacle in each of the plurality of pieces of first frame image data acquired by the first data acquisition unit 110 for each of the plurality of pieces of first frame image data by using the first accumulation conditions set in step S111 (step S112).

The above evaluation value is a value representing likeness of an obstacle. For example, in each of a plurality of pieces of first frame image data, a plurality of obstacle candidate regions is set, motion loci thereof is detected between frames, and an evaluation value is calculated for each motion locus. Accordingly, whether the obstacle candidate region belongs to a road surface or a three-dimensional object like an obstacle can be determined.

That is, for example, a method of calculating an evaluation value representing an obstacle from motion information of characteristic quantities detected in each of the plurality of pieces of first frame image data is used. First, a motion locus of a plurality of obstacle candidate regions set in times-series images is detected, an evaluation value to determine whether the selected two obstacle candidate regions belong to a horizontal surface such as a road surface or a three-dimensional object like an obstacle, and a cumulative value (first cumulative value) is calculated by accumulating the evaluation value among adjacent obstacle candidate regions and between frames.

At this point, for example, Formula (1) below is used as an accumulation condition:

$$S1(fa) = S1(fa-1) + (s1(fa) + \alpha1) \quad (1)$$

where S1(fa) represents the first cumulative value updated in the current frame fa, S1(fa-1) represents the first cumulative value in the frame (fa-1) one frame before, and s1 (fa) represents the first evaluation value calculated for the current frame fa. $\alpha1$ is a predetermined value and may be any number. The value $\alpha1$ is a number that can be changed.

If, for example, $\alpha1$ is set to 0 in the above Formula (1), the first cumulative value S1 is a value obtained by simply accumulating the first evaluation value s1 in each frame. If, for example, $\alpha1$ is set to a predetermined positive value, the first cumulative value S1 becomes a value larger than the value obtained by simply accumulating the first evaluation value s1 in each frame.

In step S111, for example, the predetermined value $\alpha1$ in Formula (1) is set.

By setting the value $\alpha1$ to a desired value, the speed of rise of the first cumulative value S1 obtained by accumulating the first evaluation value s1 with respect to the number of frames can be adjusted.

For the setting of the above first accumulation conditions, the first accumulation conditions may be set each time or a method may be adopted by which processing to change the first accumulation conditions is performed when the first accumulation conditions should be changed and processing concerning the first accumulation conditions is not performed when the first accumulation conditions should not be changed. Thus, step S111 may be executed when necessary or may be omitted depending on circumstances.

For the setting of the first accumulation conditions (change of the first accumulation conditions), a method of calculating various values about the first accumulation conditions each time may be adopted or a technique of storing various values about the first accumulation conditions in advance and selecting from stored values may be adopted. Thus, any technique may be adopted to set the first accumulation conditions (change the first accumulation conditions).

Then, for example, the first reference value is set (step S113).

Then, the first cumulative value S1 derived in step S112 and the first reference value set in step S113 are compared (step So114). If the first cumulative value S1 is less than the first reference value, the processing returns to, for example, step S101. If the first cumulative value S1 is equal to or more than the first reference value, the presence of an obstacle in the first region 211 is assumed and a signal is generated (step S130) . Then, the processing returns to, for example, step S101.

For the setting of the first reference value, a method of setting the first reference value each time may be adopted or a method may be adopted by which processing to change the first reference value is performed when the first reference value should be changed and processing concerning the first reference value is not performed when the first reference value should not be changed. Thus, step S113 may be executed when necessary or may be omitted depending on circumstances.

For the setting of the first reference value (change of the first reference value), a method of calculating various values about the first reference value each time may be adopted or a technique of storing various values about the first reference value in advance and selecting from stored values may be adopted. Thus, any technique may be adopted to set the first reference value (change the first reference value).

On the other hand, similar processing on images captured by the first imaging unit 210 is performed on images captured by the second imaging unit 220.

That is, a plurality of pieces of second frame image data in a time series captured by the second imaging unit 220 is first acquired (stepS102). The acquisition of the second frame image data is carried out by the second data acquisition unit 120. The plurality of pieces of second frame image data includes images in a time series containing the second region 221.

Then, for example, second accumulation conditions described later are set (step S121).

Then, a second cumulative value is derived by accumulating an evaluation value (second evaluation value) concerning an obstacle in each of the plurality of pieces of second frame image data acquired by the second data acquisition unit 120 for each of the plurality of pieces of second frame image data by using the second accumulation conditions set in step S121 (step S122).

At this point, for example, Formula (2) below is used as an accumulation condition:

$$S2(fb) = S2(fb-1) + (s2(fb) + \beta1) \quad (2)$$

where S2(fb) represents the second cumulative value updated in the current frame fb, S2 (fb-1) represents the second cumulative value in the frame (fb-1) one frame before, and s2(fb) represents the second evaluation value calculated for the current frame fb. $\beta1$ is a predetermined value and may be any number. The value $\beta1$ is a number that can be changed.

In step S121, for example, the predetermined value $\beta1$ in Formula (2) is set. Accordingly, the speed of rise of the second cumulative value S2 obtained by accumulating the second evaluation value s2 with respect to the number of frames can be adjusted.

Also in the case, for the setting of the second accumulation conditions, the second accumulation conditions may be set each time or a method may be adopted by which processing to change the second accumulation conditions is performed when the second accumulation conditions should be changed and processing concerning the second accumulation conditions is not performed when the second accumulation conditions should not be changed. Thus, step S121 may be executed when necessary or may be omitted depending on circumstances.

For the setting of the second accumulation conditions (change of the second accumulation conditions), a method of calculating various values about the second accumulation conditions each time may be adopted or a technique of storing various values about the second accumulation conditions in advance and selecting from stored values may be adopted. Thus, any technique may be adopted to set the second accumulation conditions (change the second accumulation conditions).

Then, for example, the second reference value is set (step S123).

Then, the second cumulative value S2 derived in step S122 and the second reference value set in step S123 are compared (step S124). If the second cumulative value S2 is less than the second reference value, the processing returns to, for example, step S102. If the second cumulative value S2 is equal to or more than the second reference value, the presence of an obstacle in the second region 221 is assumed and a signal is generated (step S130). Then, the processing returns to, for example, step S102.

Also in this case, for the setting of the second reference value, a method of setting the second reference value each time may be adopted or a method may be adopted by which processing to change the second reference value is performed when the second reference value should be changed and processing concerning the second reference value is not performed when the second reference value should not be changed. Thus, step S123 may be executed when necessary or may be omitted depending on circumstances.

For the setting of the second reference value (change of the second reference value), a method of calculating various values about the second reference value each time may be adopted or a technique of storing various values about the second reference value in advance and selecting from stored values may be adopted. Thus, any technique may be adopted to set the second reference value (change the second reference value).

In this manner, the vehicle periphery monitoring device 101 detects, for example, the other vehicle 260 approaching the first region 211 and the second region 221 in the rear of the local vehicle 250 and generates the signal sg1 as a warning to be given to the driver of the local vehicle 250.

Further, in the vehicle periphery monitoring device 101 according to the present embodiment, if the first cumulative value S1 is equal to or more than the first reference value in step S114, whether the moving direction of the obstacle (first obstacle) estimated to be present in the first region 211 is a direction from the first region 211 toward the second region 221 can be determined (step S115).

That is, as illustrated in, for example, FIG. 1, a moving direction 260a of the obstacle (other vehicle 260 as a first obstacle) present in the first region 211 is estimated and whether the estimated moving direction 260a is a direction from the first region 211 toward the second region 221 is estimated.

Then, if, as illustrated in FIG. 4, the estimated moving direction of the obstacle (first obstacle) estimated to be present in the first region 211 is the direction from the first region 211 toward the second region 221, conditions for second obstacle estimation processing are changed. For example, the second accumulation conditions are changed.

That is, the first obstacle is estimated to be present in the first region 211 in step S114 and further, in step S115, if the moving direction of the first obstacle estimated to be present in the first region 211 is the direction from the first region 211 toward the second region 221, the second accumulation conditions in step S121 are changed.

That is, for example, the value $\beta1$ in the above Formula (2) is changed. In the initial operation of the vehicle periphery monitoring device 101, for example, the value $\beta1$ is set to 0 and if, in step S115, the moving direction of the first obstacle in the first region 211 is the direction from the first region 211 toward the second region 221, the value $\beta1$ is set to a positive value. Accordingly, the speed of rise of the second cumulative value S2 obtained by accumulating the second evaluation value s2 with respect to the number of frames rises from the initial state.

That is, when the second cumulative value S2 obtained by accumulating the second evaluation value s2 is derived, for example, as illustrated in FIG. 1, the other vehicle 260 present on the travel lane 301 in the rear of the local vehicle 250 may abruptly change lanes to the adjacent lane 302 in the rear lateral direction to perform an abrupt overtaking operation. First, an operation approaching the local vehicle 250 of the other vehicle 260 performing an abrupt overtaking operation in the right direction from the rear of the local vehicle 250 is imaged by the first imaging unit 210 capturing an image of the travel lane 301 (first region 211). When the other vehicle 260 changes lanes, the other vehicle 260 moves toward the outer side of the imaging region (first region 211) of the first imaging unit 210. Then, the other vehicle 260 is imaged by the second imaging unit 220 capturing an image of the adjacent lane 302 (second region 221). Further, for example, the other vehicle 260 overtakes the local vehicle 250 and further, the other vehicle 260 moves outside of both the first region 211 and the second region 221 to move outside of the imaging regions of the first imaging unit 210 and the second imaging unit 220.

At this point, the number of frames imaging the other vehicle 260 in the second region 221 of the adjacent lane 302 is small. Thus, it takes time before the second cumulative value S2 concerning the other vehicle 260 present on the adjacent lane 302 becomes larger than the second reference value.

In this case, it is desirable to be able to detect the other vehicle 260 appearing abruptly on the adjacent lane 302 as described above in a shorter time. In the vehicle periphery monitoring device 101 according to the present embodiment, a detection result of obstacles in the first region 211 is reflected in detection conditions of obstacles in the second region 221.

That is, different lanes are monitored by a plurality of cameras and obstacle evaluation cumulative values (the first cumulative value S1 and the second cumulative value S2) are calculated inside each lane to detect obstacles based on these obstacle evaluation cumulative values. Then, if, for example, the obstacle (other vehicle 260) detected on the travel lane 301 changes lanes to the adjacent lane 302, the obstacle (other vehicle 260) on the adjacent lane 302 can be detected earlier by changing accumulation conditions of the evaluation value used for the adjacent lane 302. The other vehicle 260 appearing abruptly from the travel lane 301 to the adjacent lane 302 is a dangerous vehicle performing an abrupt overtaking operation and the dangerous vehicle can thereby be detected earlier. Accordingly, safer driving can be supported.

Thus, in the vehicle periphery monitoring device 101 according to the present embodiment, the first obstacle estimation processing can contain an estimation of the moving direction of the first obstacle. Then, if the moving direction of the first obstacle contains the direction from the first region 211 toward the second region 221, second accumulation condition changes are made.

Accordingly, the obstacle (other vehicle 260) moving abruptly from the first region 211 toward the second region 221 can be detected in a short time.

Further, as illustrated in FIG. 4, in step S124, if the second cumulative value is equal to the second reference value or more, whether the moving direction of the obstacle (second obstacle) estimated to be present in the second region 221 is the direction from the second region 221 toward the first region 211 can be determined by the vehicle periphery monitoring device 101 according to the present embodiment (step S125).

That is, for example, the moving direction of the obstacle (other vehicle 260 as a second obstacle) estimated to be present in the second region 221 is estimated and whether the estimated moving direction is the direction from the second region 221 toward the first region 211 is estimated.

Then, as illustrated in FIG. 4, if the estimated moving direction of the obstacle (second obstacle) estimated to be present in the second region 221 is the direction from the second region 221 toward the first region 211, conditions for first obstacle estimation processing are changed. For example, the first accumulation conditions are changed.

That is, for example, the value $\alpha 1$ in the above Formula (1) is changed. In the initial operation of the vehicle periphery monitoring device 101, for example, the value $\alpha 1$ is set to 0 and if, in step S125, the moving direction of the second obstacle in the second region 221 is the direction from the second region 221 toward the first region 211, the value $\alpha 1$ is set to a positive value. Accordingly, the speed of rise of the first cumulative value S1 obtained by accumulating the first evaluation value s1 with respect to the number of frames rises from the initial state.

That is, when the first cumulative value S1 obtained by accumulating the first evaluation value s1 is derived, for example, the other vehicle 260 present on the adjacent lane 302 in the rear lateral direction of the local vehicle 250 may abruptly change lanes to the travel lane 301 in the rear thereof. At this point, the number of frames imaging the other vehicle 260 in the first region 211 of the travel lane 301 is small. Thus, it takes time before the first cumulative value S1 concerning the other vehicle 260 present on the travel lane 301 becomes larger than the first reference value.

In this case, it is desirable to be able to detect the other vehicle 260 appearing abruptly on the travel lane 301 as described above in a shorter time. In the vehicle periphery monitoring device 101 according to the present embodiment, a detection result of obstacles in the second region 221 is reflected in detection conditions of obstacles in the first region 211.

Accordingly, the obstacle (other vehicle 260) moving abruptly from the second region 221 toward the first region 211 can be detected in a short time.

Thus, according to the vehicle periphery monitoring device 101 in the present embodiment, obstacles can be detected in a short time.

Therefore, in addition to conditions for the second obstacle estimation processing being changed based on a result of the first obstacle estimation processing in the vehicle periphery monitoring device 101 according to the present embodiment, further conditions for the first obstacle estimation processing may be changed based on a result of the second obstacle estimation processing.

For example, the first obstacle present in the first region 211 in the first obstacle estimation processing can be estimated based on a result of comparison of the first cumulative value obtained by accumulating the evaluation value concerning an obstacle in each of a plurality of pieces of first frame image data by using first accumulation conditions for each of the plurality of pieces of first frame image data and the first reference value. In this case, conditions for the first obstacle estimation processing changed based on a result of the second obstacle estimation processing can contain at least one of the first accumulation conditions and the first reference value.

Thus, the vehicle periphery monitoring device 101 according to the present embodiment, for example, acquires time-series images from a plurality of cameras (for example, the first imaging unit 210 and the second imaging unit 220) monitoring a plurality of lanes and calculates obstacle evaluation values (for example, the first evaluation value s1 and the second evaluation value s2) representing likeness of an obstacle from each of the time-series images to derive obstacle evaluation cumulative values (for example, the first cumulative value S1 and the second cumulative value S2) by accumulating these evaluation values between frames. Then, an obstacle is detected based on these obstacle evaluation cumulative values.

At this point, a detection result of an obstacle based on images captured by one camera is used for processing to detect an obstacle based on images captured by the other camera. Further, a detection result of an obstacle based on images captured by the other camera is used for processing to detect an obstacle based on images captured by the one camera. In this manner, a detection result of an obstacle based on images captured by at least one camera is used for processing to detect an obstacle based on images captured by the other camera. Further, mutual detection results are used to change mutual detection methods.

At this point, if the detected obstacle changes lanes, the vehicle periphery monitoring device 101 can have a function to detect the lane before the change and the lane after the change. Then, the vehicle periphery monitoring device 101 changes accumulation conditions (for example, the first accumulation conditions and second accumulation conditions) for detecting an obstacle on the lane after the change. More specifically, for example, the value $\alpha 1$ and the value $\beta 1$ are changed. Accordingly, an obstacle on the lane after the change can be detected earlier.

However, the embodiment of the present embodiment is not limited to the above embodiment. For example, accumulation conditions (for example, the first accumulation conditions and second accumulation conditions) for detecting an obstacle may be changed regardless of the direction of the change of lane.

That is, for example, in step S114 described with reference to FIG. 4, when the first cumulative value S1 is equal to the first reference value or more and the obstacle (other vehicle 260) is detected in the first region 211 (for example, the travel lane 301 of the local vehicle 250), settings of the second accumulation conditions (step S121) may be made to change the second accumulation conditions.

That is, if the other vehicle 260 approaches the local vehicle 250 from behind, the other vehicle 260 may abruptly change lanes from the travel lane 301 of the local vehicle 250 to the adjacent lane 302. In this case, when the obstacle (other vehicle 260) is detected on the travel lane 301 of the local vehicle 250, the obstacle on the adjacent lane 302 can be detected earlier by changing the second accumulation conditions for the adjacent lane 302.

Similarly, for example, in step S124 described with reference to FIG. 4, when the second cumulative value S2 is equal to the second reference value or more and the obstacle (other vehicle 260) is detected in the second region 221 (for example, the adjacent lane 302 of the local vehicle 250), settings of the first accumulation conditions (step S111) may be made to change the first accumulation conditions.

That is, if the other vehicle 260 approaches the local vehicle 250 from behind, the other vehicle 260 may abruptly change lanes from the adjacent lane 302 to travel lane 301 of the local vehicle 250. For example, if another vehicle running still faster approaches the other vehicle 260 detected on the adjacent lane 302 from behind, the detected other vehicle 260 may abruptly change lanes to the travel lane 301 to allow the other vehicle running faster to overtake. In this case, when the obstacle (other vehicle 260) is detected on the adjacent lane 302, the obstacle on the travel lane 301 can be detected earlier by changing the first accumulation conditions for the travel lane 301.

Thus, the second accumulation conditions may be changed based on a result of the first obstacle estimation processing (step S110 and more specifically, for example, step S114).
Similarly, the second accumulation conditions may be changed based on a result of the second obstacle estimation processing (step S120 and more specifically, for example, step S124.

Steps S111, S112, S113, and S114 are contained in step S110 illustrated in FIG. 3. Step S110 may further contain step S115. Steps S121, S122, S123, and S124 are contained in step S120 illustrated in FIG. 3. Step S120 may further contain step S125.

Steps S110 and S120 may simultaneously be executed if technically possible. A plurality of pieces of processing contained in step S110 and a plurality of pieces of processing contained in step S120 may be interchanged in respective orders if technically possible and may also be performed simultaneously. Steps S110 and S120 may be performed a plurality of times and each piece of the plurality of processing contained in step S110 and each piece of the plurality of processing contained in step S120 may be performed any number of times if technically possible.

At least one of steps S101, S111, S112, S113, S114, and S115 and at least one of steps S102, S121, S122, S123, S124, and S125 illustrated in FIG. 4 may be performed simultaneously if technically possible and the order thereof may be interchanged if technically possible.

For example, the above steps S101, S111, S112, S113, S114, and S115 and the above steps S102, S121, S122, S123, S124, and S125 may be performed by one processing device (arithmetic device) or separate processing devices. When performed by separate processing devices, the above steps may be performed at the same time in parallel or at different times separately.

For example, step S101 and step S102 illustrated in FIG. 4 may be performed simultaneously in parallel.
For example, after steps S111, S112, S113, and S114 being performed by using the initial value $\alpha 1$, step S121 may be performed by using a result of step S114 to subsequently perform steps S122, S123, and S124 and to perform step S111 by using a result of step S124.

Further, for example, a predetermined storage unit may be caused to store a result of step S114 to perform step S121 by using a result of step S114 stored in the storage unit at any necessary time. Further, for example, a predetermined storage unit may be caused to store a result of step S124 to perform step S111 by using a result of step S124 stored in the storage unit at any necessary time.

Further, for example, a predetermined storage unit may be caused to store a result of step S115 to perform step S121 by using a result of step S115 stored in the storage unit at any necessary time. Further, for example, a predetermined storage unit may be caused to store a result of step S125 to perform step S111 by using a result of step S125 stored in the storage unit at any necessary time.

That is, the method of reflecting a result of the obstacle detection processing (for example, step S114 is contained and step S115 may also be contained) in the first region 211 in step S121 and the method of reflecting a result of the obstacle detection processing (for example, step S124 is contained and step S125 may also be contained) in the second region 221 in step S111 have a common flag available that can be referred to each other between processing of different monitoring regions (for example, the first region 211 and the second region 221). By rewriting the flag based on a detection result of obstacle, the flag can be referred to in processing (for example, step S111 and step S121) to set accumulation conditions. That is, obstacle detection can be notified of each other.

Thus, processing of the vehicle periphery monitoring device 101 can be modified in various ways.

In the present concrete example, the method of calculating evaluation values (for example, the first evaluation value s1 and the second evaluation value s2) representing likeness of an obstacle from motion information between frames as the first cumulative value S1 and the second cumulative value S2 and accumulating evaluation values is adopted, but an embodiment of the present invention is not limited to such an example. For example, shape patterns of the vehicle to be detected may be stored in advance to calculate evaluation values to estimate an obstacle from image data based on the stored shape patterns. Incidentally, a learning effect may be applied to the shape patterns to calculate characteristic values to estimate an obstacle from image data by using a dictionary updated by learning. Thus, in an embodiment of the present invention, any calculation method of evaluation values representing likeness of an obstacle (approaching other vehicle 260) may be used.

In the above description, the value $\beta1$ in step S121 is changed based on a result of at least one of, for example, step S114 and step S115 and the value $\alpha1$ in step S111 is changed based on a result of at least one of, for example, step S124 and step S125, but an embodiment of the present invention is not limited to such an example.

That is, for example, Formula (3) shown below may be used as the first accumulation condition for deriving the first cumulative value S1:

$$S1(fa) = \alpha2\{S1(fa-1) + s1(fa)\} \quad (3)$$

where $\alpha2$ is a predetermined value and is a number that can be changed. According to this method, as shown in Formula (3), a value obtained by multiplying the value of the sum of the first cumulative value S1 (fa-1) of the frame (fa-1) one frame before and the characteristic value s1(fa) calculated for the current frame fa by $\alpha2$ becomes the first cumulative value S1 (fa) of the current frame fa. The value $\alpha2$ at this point is changed based on a result of, for example, step S124.

Similarly, for example, Formula (4) shown below may be used as the second accumulation condition for deriving the second cumulative value S2:

$$S2(fb) = \beta2\{S2(fb-1) + s2(fb)\} \quad (4)$$

where $\beta2$ is a predetermined value and is a number that can be changed. According to this method, as shown in Formula (4), a value obtained by multiplying the value of the sum of the second cumulative value S2(fb-1) of the frame (fb-1) one frame before and the characteristic value s2 (fb) calculated for the current frame fb by $\beta2$ becomes the second cumulative value S2 (fb) of the current frame fb. The value $\beta2$ at this point is changed based on a result of, for example, step S114.

Further, for example, Formula (5) shown below may be used as the first accumulation condition for deriving the first cumulative value S1:

$$S1(fa) = S1(fa-1) + \alpha3 \cdot s1(fa) \quad (5)$$

where $\alpha3$ is a predetermined value and is a number that can be changed. According to this method, as shown in Formula (5), a value obtained by adding the first cumulative value S1 (fa-1) of the frame (fa-1) one frame before and a value obtained by multiplying the characteristic value s1(fa) calculated for the current frame fa by $\alpha3$ becomes the first cumulative value S1(fa) of the current frame fa. The value $\alpha3$ at this point is changed based on a result of, for example, step S124.

Similarly, for example, Formula (6) shown below may be used as the second accumulation condition for deriving the second cumulative value S2:

$$S2(fb) = S2(fb-1) + \beta3 \cdot s2(fb) \quad (6)$$

where $\beta3$ is a predetermined value and is a number that can be changed. According to this method, as shown in Formula (6), a value obtained by adding the second cumulative value S2 (fb-1) of the frame (fb-1) one frame before and a value obtained by multiplying the characteristic value s2 (fb) calculated for the current frame fb by $\beta3$ becomes the second cumulative value S2 (fb) of the current frame fb. The value $\beta3$ at this point is changed based on a result of, for example, step S114.

Further, Formula (7) shown below may be used as the first accumulation condition:

$$S1(fa) = \alpha2\{S1(fa-1) + \alpha3 \cdot s1(fa)\} \quad (7)$$

Further, Formula (8) shown below may be used as the second accumulation condition:
$$S2(fb) = \beta2\{S2(fb-1) + \beta3 \cdot s2(fb)\} \quad (8)$$

Then, at least one of the value $\alpha1$, the value $\alpha2$, and the value $\alpha3$ is changed based on a result of, for example, step S124. Further, at least one of the value $\beta1$, the value $\beta2$, and the value $\beta3$ is changed based on a result of, for example, step S114.

Then, the second accumulation conditions for the second cumulative value S2 for detecting an obstacle present in the second region 221 are changed based on a detection result (step S114) of an obstacle in the first region 211 and thus, when, for example, the obstacle (other vehicle 260) changes lanes from the first region 211 to the second region 221, the time before the second cumulative value S2 reaches the second reference value can be shortened.

Further, the first accumulation conditions for the first cumulative value S1 for detecting an obstacle present in the first region 211 are changed based on a detection result (step S124) of an obstacle in the second region 221 and thus, when, for example, the obstacle (other vehicle 260) changes lanes from the second region 221 to the first region 211, the time before the first cumulative value S1 reaches the first reference value can be shortened.

In this case, as described above, by changing the second accumulation conditions when the estimated moving direction of the obstacle (first obstacle) estimated to be present in the first region 211 is the direction from the first region 211 toward the second region 221, that the other vehicle 260 present on the travel lane 301 behind the local vehicle 250 abruptly changes lanes to the adjacent lane 302 in the rear lateral direction to perform an abrupt overtaking operation can effectively be detected in a short time.

Further, as described above, by changing the first accumulation conditions when the estimated moving direction of the obstacle (second obstacle) estimated to be present in the second region 221 is the direction from the second region 221 toward the first region 211, that the other vehicle 260 present on the adjacent lane 302 in the rear lateral direction of the local vehicle 250 abruptly changes lanes to the travel lane 301 behind the local vehicle 250 can effectively be detected in a short time.

For example, the following method can be adopted for the estimation of an obstacle. That is, a moving vector in an image concerning the obstacle (other vehicle 260) estimated to be present is calculated by performing tracking processing between frames using a technique like template matching. Then, if the change of the horizontal component (for example, the component perpendicular to the extending direction of the travel lane 301 in the current position of the local vehicle 250) of the moving vector is larger than, for example, a preset value, the other vehicle 260 is estimated to change lanes. Then, whether the moving direction of the other vehicle 260 is the direction from the travel lane 301 (first region 211) toward the adjacent lane 302 (second region 221) or the direction from the adjacent lane 302 (second region 221) toward the travel lane 301 (first region 211) is estimated. Thus, the direction of the lane change of the other vehicle 260 can be estimated from the direction of the moving vector of the other vehicle 260.

Accordingly, the direction of the lane change of the other vehicle 260 is estimated in step S115 and based on the result thereof, for example, the second accumulation conditions are changed (S121). Further, the direction of the lane change of the other vehicle 260 is estimated in step S125 and based on the result thereof, for example, the first accumulation conditions are changed (S111).

(Second embodiment)

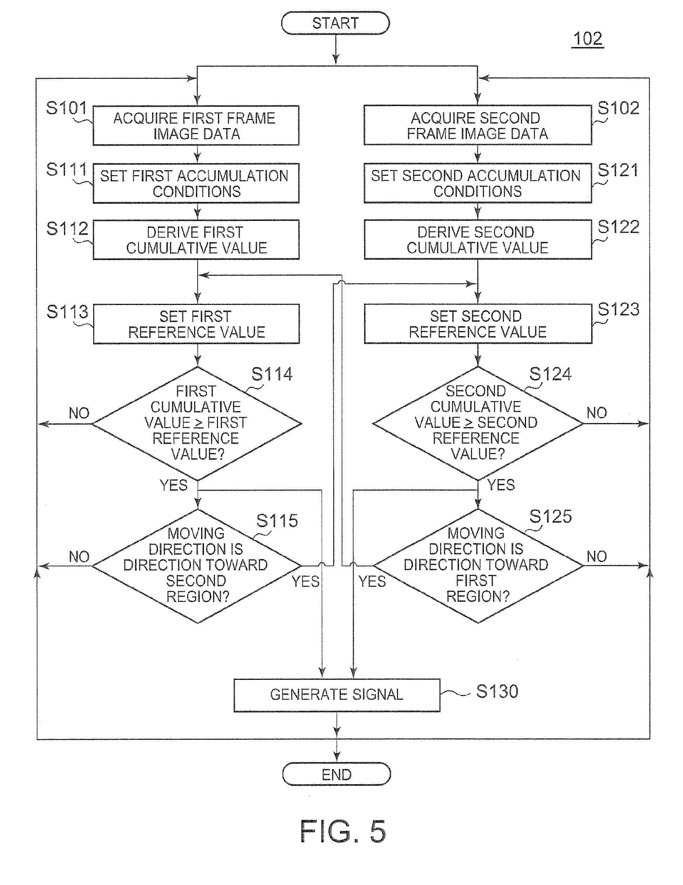

FIG. 5 is a flow chart illustrating a concrete example of the operation of the vehicle periphery monitoring device according to the second embodiment.

The configuration of a vehicle periphery monitoring device 102 according to the present embodiment can be made similar to the configuration of the vehicle periphery monitoring device 101 and thus, the description thereof is omitted. An operation of the vehicle periphery monitoring device 102 that is different from the operation of the vehicle periphery monitoring device 101 is performed.

That is, as shown in FIG. 5, if the first cumulative value S1 is equal to the first reference value or more in step S114 and the presence of a first obstacle is estimated in the first region 211 and the moving direction of the first obstacle is the direction from the first region 211 toward the second region 221 in step S115 in the vehicle periphery monitoring device 102, the second reference value is changed (step S123). That is, the second reference value contained in conditions for the second obstacle estimation processing is changed.

Further, if the second cumulative value S2 is equal to the second reference value or more in step S124 and the presence of a second obstacle is estimated in the second region 221 and the moving direction of the second obstacle is the direction from the second region 221 toward the first region 211 in step S125 in the vehicle periphery monitoring device 102, the first reference value is changed (step S113). That is, the first reference value contained in conditions for the first obstacle estimation processing is changed.

For example, Formula (9) shown below is used in step S113 as the first reference value.

$$T1(fa) = Td1 - Tn1 \quad (9)$$

where T1 (fa) is the reference value (first reference value) in the current frame fa. Td1 is a predetermined value and, for example, an initial value of the first reference value T1. Tn1 is a number that can be changed. For example, the value Tn1 is initially set to 0 and if, for example, the presence of a second obstacle is estimated in the second region 221 and the moving direction of the second obstacle is the direction from the second region 221 toward the first region 211, the value Tn1 is changed to a positive number.

Thus, if the presence of the second obstacle is estimated in the second region 221 and the moving direction of the second obstacle is the direction from the second region 221 toward the first region 211, the first reference value T1 is decreased.

Accordingly, if, for example, the first cumulative value S1 is small due to, for example, an abrupt lane change, an obstacle can be detected earlier by the first reference value T1 being set properly by changing the first reference value T1.

Further, for example, Formula (10) shown below is used in step S123 as the second reference value.

$$T2(fb) = Td2 - Tn2 \quad (10)$$

where T2(fb) is the reference value (second reference value) for the current frame fb. Td2 is a predetermined value and, for example, an initial value of the second reference value T2. Tn2 is a number that can be changed. For example, the value Tn2 is initially set to 0 and if, for example, the presence of a first obstacle is estimated in the first region 211, the value Tn2 is changed to a positive number.

Thus, if the presence of the first obstacle is estimated in the first region 211 and the moving direction of the first obstacle is the direction from the first region 211 toward the second region 221, the second reference value T2 is decreased.

Accordingly, if, for example, the second cumulative value S2 is small due to, for example, an abrupt lane change like an abrupt overtaking operation, an obstacle can be detected earlier by the second reference value T2 being set properly by changing the second reference value T2.

If, in the above description, the presence of a second obstacle is estimated in the second region 221 and the moving direction of the second obstacle is the direction from the second region 221 toward the first region 211 (that is, based on a result in step S125), the value Tn1 is changed. However, as described above, if the presence of a second obstacle is estimated in the second region 221, the value Tn1 may be changed. That is, the first reference value T1 may be changed based on a result in step S124.

Similarly, if the presence of a first obstacle is estimated in the first region 211, the value Tn2 may be changed. That is, the second reference value T2 may be changed based on a result in step S114.

Further, for example, Formula (11) shown below may be used in step S113 as the first reference value.

$$T1(fa) = Td1 - Tn1(fa) \quad (11)$$

That is, the first reference value T1 (fa) for the current frame fa may change due to the value Tn1(fa) that can change in accordance with the number of frames.

Further, for example, Formula (12) shown below may be used in step S123 as the second reference value.

$$T2(fb) = Td2 - Tn2(fb) \quad (12)$$

That is, the second reference value T2 (fb) for the current frame fb may change due to the value Tn2(fb) that can change in accordance with the number of frames.

Thus, at least one of the first reference value T1 and the second reference value T2 may dynamically be changed based on a detection result of obstacle. That is, for example, the range of the reference value (at least one of the value Tn1 (fa) and the value Tn2 (fb)) may dynamically be changed in accordance with the absolute value of a moving vector held in a detection result of the lane change of the other vehicle 260.

(Third embodiment)

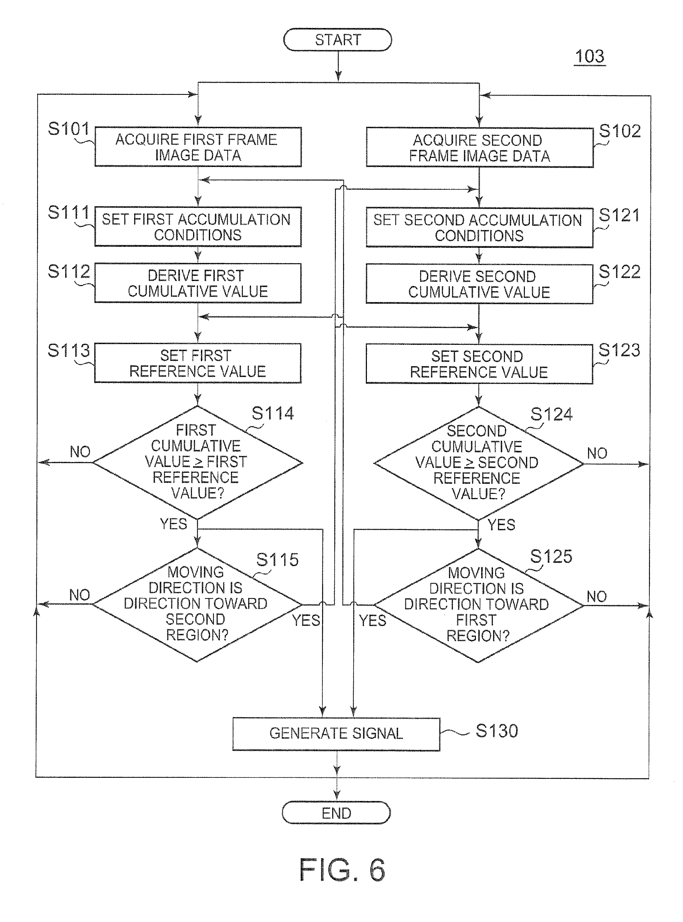

FIG. 6 is a flow chart illustrating a concrete example of the operation of the vehicle periphery monitoring device according to the third embodiment.

The configuration of a vehicle periphery monitoring device 103 according to the present embodiment can be made similar to the configuration of the vehicle periphery monitoring device 101 and thus, the description thereof is omitted. An operation of the vehicle periphery monitoring device 103 that is different from the operation of the vehicle periphery monitoring device 101 is performed.

That is, as shown in FIG. 6, if the first cumulative value S1 is equal to the first reference value T1 or more in step S114 and the presence of a first obstacle is estimated in the first region 211 and the moving direction of the first obstacle is the direction from the first region 211 toward the second region 221 in step S115 in the vehicle periphery monitoring device 103, the second accumulation conditions are changed (step S121) and the second reference value T2 is changed (step S123).

In this case, as described above, if the first cumulative value S1 is equal to the first reference value T1 or more in step S114 and the presence of a first obstacle is estimated in the first region 211, the second accumulation conditions may be changed (step S121) and the second reference value T2 may be changed (step S123).

Thus, in the present embodiment, at least one of the second accumulation conditions (for example, at least one of the value $\beta 1$, the value $\beta 2$, and the value $\beta 3$) and the second reference values T2 (for example, the value Tn2 and the value Tn2(fb)) can be changed based on a result of the first obstacle estimation processing (step S110).

Similarly, as shown in FIG. 6, if the second cumulative value S2 is equal to the second reference value T2 or more in step S124 and the presence of a second obstacle is estimated in the second region 221 and the moving direction of the second obstacle is the direction from the second region 221 toward the first region 211 in step S125, the first accumulation conditions are changed (step S111) and the first reference value T1 is changed (step S113).

In this case, as described above, if the second cumulative value S2 is equal to the second reference value T2 or more in step S124 and the presence of a second obstacle is estimated in the second region 221, the first accumulation conditions may be changed (step S111) and the first reference value T1 may be changed (step S113).

Thus, in the present embodiment, at least one of the first accumulation conditions (for example, at least one of the value $\alpha 1$, the value $\alpha 2$, and the value $\alpha 3$) and the first reference values T1 (for example, the value Tn1 and the value Tn1(f)) can be changed based on a result of the second obstacle estimation processing (step S120).

(Fourth embodiment)

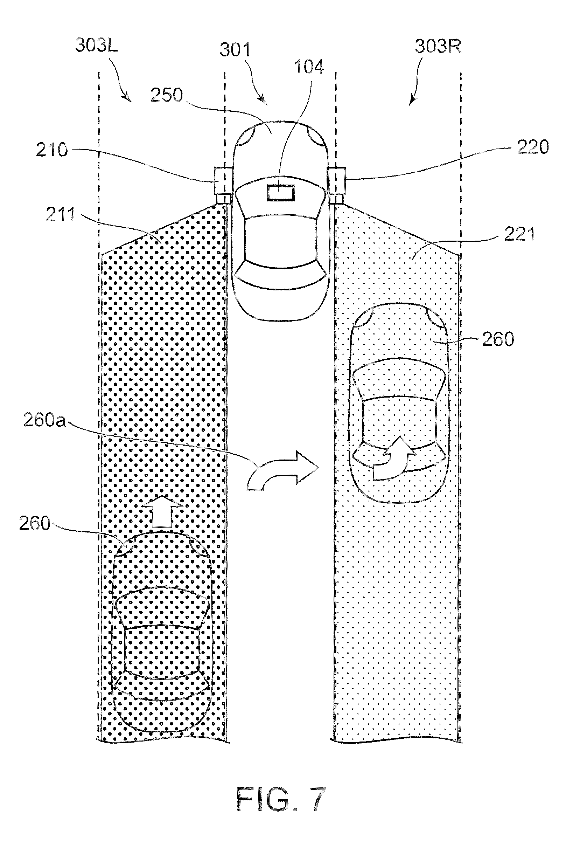

FIG. 7 is a schematic diagram illustrating the condition of use of the vehicle periphery monitoring device according to the fourth embodiment.

The configuration of a vehicle periphery monitoring device 104 according to the present embodiment can be made similar to the configuration of the vehicle periphery monitoring device 101 and thus, the description thereof is omitted. A condition of use of the vehicle periphery monitoring device 104 that is different from the condition of use of the vehicle periphery monitoring device 101 is applied.

That is, in the vehicle periphery monitoring device 104 according to the present embodiment, the first imaging unit 210 images a left adjacent lane 303L on the left side of the travel lane 301 on which the local vehicle 250 is running and the second imaging unit 220 images a right adjacent lane 303R on the right side of the travel lane 301.

That is, the first region 211 can contain at least a portion of the left adjacent lane 303L that is at least a portion of the rear of the local vehicle 250. Then, the second region 221 can contain at least a portion of the right adjacent lane 303R that is at least a portion of the rear of the local vehicle 250.

Further, the vehicle periphery monitoring device 104 can perform the processing described with reference to FIGS. 3 to 6.

For example, if the first cumulative value S1 is equal to the first reference value T1 or more, the presence of a first obstacle is estimated in the first region 211 (in this example, the left adjacent lane 303L), and the moving direction of the first obstacle is the direction from the first region 211 toward the second region 221 (right adjacent lane 303R), conditions for the second obstacle estimation processing are changed. For example, the second accumulation conditions are changed and the second reference value T2 is changed. Accordingly, if, for example, the other vehicle 260 changes lanes from the left adjacent lane 303L to the travel lane 301 or the other vehicle 260 changes lanes from the left adjacent lane 303L to the right adjacent lane 303R, the obstacle (other vehicle 260) on the right adjacent lane 303R can be detected in a short time.

If the first cumulative value S1 is equal to the first reference value T1 or more and the presence of a first obstacle is estimated in the first region 211 (in this example, the left adjacent lane 303L), the second accumulation conditions are changed and the second reference value T2 is changed. Accordingly, in preparation for the possibility that, for example, the other vehicle 260 is present on the left adjacent lane 303L and changes lanes, the obstacle (other vehicle 260) on the right adjacent lane 303R can be detected in a short time.

Similarly, for example, if the second cumulative value S2 is equal to the second reference value T2 or more, the presence of a second obstacle is estimated in the second region 221 (in this example, the right adjacent lane 303R), and the moving direction of the second obstacle is the detection from the second region 221 toward the first region 211 (left adjacent lane 303L), conditions for the first obstacle estimation processing are changed. For example, the first accumulation conditions are changed and the first reference value T1 is changed. Accordingly, if, for example, the other vehicle 260 changes lanes from the right adjacent lane 303R to the travel lane 301 or the other vehicle 260 changes lanes from the right adjacent lane 303R to the left adjacent lane 303L, the obstacle (other vehicle 260) on the left adjacent lane 303L can be detected in a short time.

If the second cumulative value S2 is equal to the second reference value T2 or more and the presence of a second obstacle is estimated in the second region 221 (in this example, the right adjacent lane 303R), the first accumulation conditions are changed and the first reference value T1 is changed. Accordingly, in preparation for the possibility that, for example, the other vehicle 260 is present on the right adjacent lane 303R and changes lanes, the obstacle (other vehicle 260) on the left adjacent lane 303L can be detected in a short time.

(Fifth embodiment)

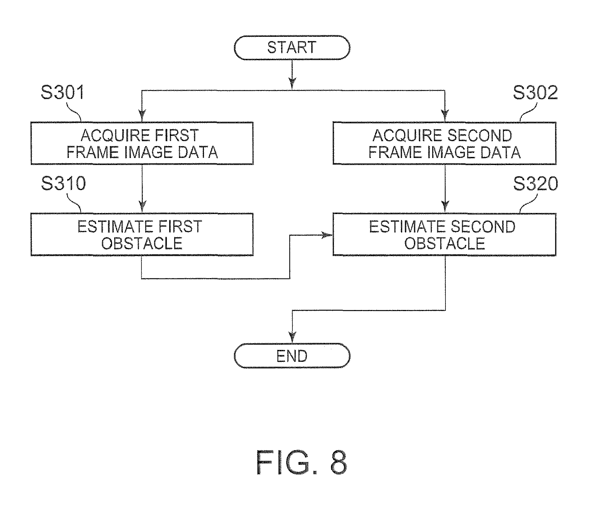

FIG. 8 is a flow chart illustrating a vehicle periphery monitoring method according to the fifth embodiment.

According to the vehicle periphery monitoring method according to the present embodiment, as shown in FIG. 8, a plurality of pieces of first frame image data in a time series captured by the first imaging unit 210 imaging the first region 211 containing the rear side of the vehicle (local vehicle 250) is first acquired (step S301).

Then, a plurality of pieces of second frame image data in a time series captured by the second imaging unit 220 imaging the second region 221 containing the rear side of the vehicle (local vehicle 250) and different from the first region 211 is acquired (step S302).

Then, based on the plurality of pieces of first frame image data, the first obstacle present in the first region 211 is estimated (step S310). For example, the first obstacle present in the first region 211 is estimated based on a result of comparison of the first cumulative value S1 obtained by accumulating the evaluation value (for example, the first evaluation value s1) concerning an obstacle in each of a plurality of pieces of first frame image data by using the first accumulation conditions for each of the plurality of pieces of first frame image data and the first reference value T1.

Then, the second obstacle present in the second region 221 is estimated based on the plurality of pieces of second frame image data by using conditions changed based on the estimation of the first obstacle (step S320). For example, the second obstacle present in the second region 221 is estimated based on a result of comparison of the second cumulative value S2 obtained by accumulating the evaluation value (for example, the second evaluation value s2) concerning an obstacle in each of the plurality of pieces of second frame image data by using the second accumulation conditions changed based on the estimation of the first obstacle for each of the plurality of pieces of second frame image data and the second reference value T2.

Accordingly, an obstacle can be detected in a short time.

The above steps S301, S302, S310, and S320 can be executed simultaneously if technically possible and the order of execution thereof can be interchanged.

Incidentally, the present vehicle periphery monitoring method may further include outputting a signal based on at least one of the estimation of the first obstacle and the estimation of the second obstacle.

The estimation of the first obstacle (step S310) can contain the estimation of the moving direction of the first obstacle and if the moving direction of the first obstacle contains the direction from the first region 211 toward the second region 221, conditions for second obstacle estimation processing can be changed. For example, if the moving direction of the first obstacle contains the direction from the first region 211 toward the second region 221, at least one of the second accumulation conditions and the second reference value T2 can be changed.

Conditions for first obstacle estimation processing may be changed based on a result of the estimation of the second obstacle. For example, at least one of the first accumulation conditions and the first reference value T1 may be changed based on a result of the estimation of the second obstacle.

In this case, the estimation of the second obstacle (step S320) can contain the estimation of the moving direction of the second obstacle and if the moving direction of the second obstacle contains the direction from the second region 221 toward the first region 211, conditions for first obstacle estimation processing can be changed. For example, if the moving direction of the second obstacle contains the direction from the second region 221 toward the first region 211, at least one of the first accumulation conditions and the first reference value T1 can be changed.

Also in this case, the first region 211 can contain at least a portion of the rear of the local vehicle 250 and the second region 221 can contain at least a portion of the rear lateral of the local vehicle 250.

Further, the first region 211 can contain at least a portion of the travel lane 301 on which the local vehicle 250 is running and the second region 221 can contain at least a portion of the adjacent lane 302 adjacent to the travel lane 301.

However, the present embodiment is not limited to the above example and, for example, the first region 211 can contain at least a portion of the left adjacent lane 303L of the travel lane 301 on which the local vehicle 250 is running and the second region 221 can contain at least a portion of the right adjacent lane 303R of the travel lane 301.

According to the vehicle periphery monitoring device and the vehicle periphery monitoring method in the embodiments of the present invention, an obstacle can be detected in a short time. That is, a dangerous vehicle performing an abrupt overtaking operation including a lane change can be detected earlier by, for example, monitoring a plurality of adjacent lanes using a plurality of cameras and mutually using obstacle detection results of the respective cameras.

In the foregoing, the embodiments of the present invention have been described with reference to concrete examples. However, the present invention is not limited to the above embodiments. For example, the concrete configuration of each element such as the data acquisition unit, obstacle estimation processing unit, processing unit, and signal generator contained in a vehicle periphery monitoring device is included in the scope of the present invention insofar as a person skilled in the art can gain a similar effect by making appropriate selections from the publicly known range. Any combination of two elements of each concrete example or more within the range of technical possibility is included in the scope of the present invention insofar as the gist of the present invention is contained.

In addition, all vehicle periphery monitoring devices and vehicle periphery monitoring methods that can be carried out by a person skilled in the art by appropriately changing the design based on the vehicle periphery monitoring devices and vehicle periphery monitoring methods described above as the embodiments of the present invention are included in the scope of the present invention insofar as the gist of the present invention is contained.

In addition, a person skilled in the art can conceive of various alterations and modifications within the category of ideas of the present invention and it is understood that such alterations and modifications also belong to the scope of the present invention.

Some embodiments have been described above, but these embodiments are shown simply as examples and do not intend to limit the scope of the present invention. Actually, novel devices and methods described herein may be embodied in various other forms and further, various omissions, substitutions, or alterations in forms of devices and methods described herein may be made without deviating from the gist and spirit of the present invention. Appended claims and equivalents or equivalent methods thereof are intended to contain such forms or modifications so as to be included in the scope, gist, or spirit of the present invention.

Reference Signs List

101, 102, 103, 104: Vehicle periphery monitoring device; 110: First data acquisition unit; 120: Second data acquisition unit; 130: Obstacle estimation processing unit; 140: Processing unit; 150: Signal generator; 210: First imaging unit; 211: First region; 220: Second imaging unit; 221: Second region; 250 : Local vehicle (vehicle) ; 260: Other vehicle; 260a: Moving direction; 301: Travel lane; 302: Adjacent lane; 303L: Left adjacent lane; 303R: Right adjacent lane; sgl: Signal

**Claims**

1. A vehicle periphery monitoring device mounted on a vehicle to detect an obstacle in a periphery of the vehicle, comprising:

   a first data acquisition unit that acquires a plurality of pieces of first frame image data in a time series imaged by a first imaging unit imaging a first region containing a rear side of the vehicle;
   a second data acquisition unit that acquires a plurality of pieces of second frame image data in the time series imaged by a second imaging unit imaging a second region containing the rear side of the vehicle and different from the first region; and

an obstacle estimation processing unit that performs

first obstacle estimation processing that estimates a first obstacle present in the first region based on the plurality of pieces of first frame image data acquired by the first data acquisition unit;

second obstacle estimation processing that estimates a second obstacle present in the second region based on the plurality of pieces of second frame image data acquired by the second data acquisition unit; and

signal output processing that outputs a signal based on at least one of a result of the first obstacle estimation processing and a result of the second obstacle estimation processing, wherein

conditions for the second obstacle estimation processing are changed based on the result of the first obstacle estimation processing.

2. The vehicle periphery monitoring device according to claim 1, wherein

the second obstacle is estimated based on a result of comparison of a second accumulation value obtained by accumulating an evaluation value concerning the obstacle in each of the plurality of pieces of second frame image data by using second accumulation conditions for each of the plurality of pieces of second frame image data and a second reference value, and

the conditions for the second obstacle estimation processing changed based on the result of the first obstacle estimation processing contain at least one of the second accumulation conditions and the second reference value.

3. The vehicle periphery monitoring device according to claim 1, wherein conditions for the first obstacle estimation processing are changed based on the result of the second obstacle estimation processing.

4. The vehicle periphery monitoring device according to claim 3, wherein

the first obstacle is estimated based on a result of comparison of a first accumulation value obtained by accumulating an evaluation value concerning the obstacle in each of the plurality of pieces of first frame image data by using first accumulation conditions for each of the plurality of pieces of first frame image data and a first reference value, and

the conditions for the first obstacle estimation processing changed based on the result of the second obstacle estimation processing contain at least one of the first accumulation conditions and the first reference value.

5. The vehicle periphery monitoring device according to claim 3, wherein

the second obstacle estimation processing contains estimation of a moving direction of the second obstacle, and when the moving direction contains a direction from the second region toward the first region, the conditions for the first obstacle estimation processing are changed.

6. The vehicle periphery monitoring device according to claim 1, wherein

the first obstacle estimation processing contains estimation of a moving direction of the first obstacle, and when the moving direction contains a direction from the first region toward the second region, the conditions for the second obstacle estimation processing are changed.

7. The vehicle periphery monitoring device according to claim 1, wherein

the first region contains at least a portion of a rear of the vehicle, and

the second region contains at least a portion of a rear lateral of the vehicle.

8. The vehicle periphery monitoring device according to claim 1, wherein

the first region contains at least a portion of a local lane on which the vehicle is running, and

the second region contains at least a portion of an adjacent lane adjacent to the local lane.

9. A vehicle periphery monitoring method, comprising:

acquiring a plurality of pieces of first frame image data in a time series imaged by a first imaging unit imaging a first region containing a rear side of the vehicle;

acquiring a plurality of pieces of second frame image data in the time series imaged by a second imaging unit imaging a second region containing the rear side of the vehicle and different from the first region;

estimating a first obstacle present in the first region based on the plurality of pieces of first frame image data; and

estimating a second obstacle present in the second region based on the plurality of pieces of second frame image data by using conditions changed based on estimation of the first obstacle.

**10.** The vehicle periphery monitoring method according to claim 9, wherein
a moving direction of the first obstacle is estimated and
when the moving direction contains a direction from the first region toward the second region, the conditions are changed for estimating the second obstacle.

**11.** The vehicle periphery monitoring method according to claim 9, wherein
the second obstacle is estimated based on a result of comparison of a second accumulation value obtained by accumulating an evaluation value concerning an obstacle in each of the plurality of pieces of second frame image data by using second accumulation conditions for each of the plurality of pieces of second frame image data and a second reference value, and
the conditions for estimating the second obstacle changed based on estimation of the first obstacle contain at least one of the second accumulation conditions and the second reference value.

**12.** A vehicle device that detects an obstacle in a periphery, comprising:

an image recognition unit that recognizes an image in a first region containing a rear side of the vehicle and a second region containing the rear side of the vehicle and different from the first region;
a first obstacle estimation unit that estimates a first obstacle recognized by the image recognition unit and present in the first region;
a determination unit that determines that a moving direction of the first obstacle recognized by the image recognition unit is a direction from the first region toward the second region; and
a second obstacle estimation unit that estimates a second obstacle recognized by the image recognition unit and present in the second region and relaxes conditions for estimating the second obstacle when the first obstacle estimation unit estimates that the first obstacle is present in the first region and the determination unit determines that the moving direction of the first obstacle is the direction from the first region toward the second region.

**13.** The vehicle device according to claim 12, wherein
the first region contains at least a portion of a local lane on which the vehicle is running, and
the second region contains at least a portion of an adjacent lane adjacent to the local lane.

**14.** The vehicle device according to claim 13, wherein the image recognition unit includes a first imaging unit provided in a rear portion of the vehicle to capture an image in a rear direction of the vehicle and a second imaging unit provided in a rear lateral portion of the vehicle to capture an image in a rear lateral direction of the vehicle.

**15.** The vehicle device according to claim 12, wherein
the second obstacle is estimated based on a result of comparison of an accumulation value obtained by accumulating an evaluation value concerning an obstacle in each of a plurality of pieces of frame image data by using accumulation conditions for each of the plurality of pieces of frame image data and a reference value, and
conditions relaxed by the second obstacle estimation unit are the accumulation conditions or the reference value.

FIG. 1

FIG. 2

FIG. 3

FIG. 4

FIG. 5

**FIG. 6**

FIG. 7

START

S301

ACQUIRE FIRST
FRAME IMAGE DATA

S302

ACQUIRE SECOND
FRAME IMAGE DATA

S310

ESTIMATE FIRST
OBSTACLE

S320

ESTIMATE SECOND
OBSTACLE

END

FIG. 8

## INTERNATIONAL SEARCH REPORT

International application No.

PCT/JP2011/000416

### A. CLASSIFICATION OF SUBJECT MATTER
*G08G1/16*(2006.01)i, *G06T1/00*(2006.01)i, *H04N7/18*(2006.01)i

According to International Patent Classification (IPC) or to both national classification and IPC

### B. FIELDS SEARCHED

Minimum documentation searched (classification system followed by classification symbols)
G08G1/16, G06T1/00, H04N7/18

Documentation searched other than minimum documentation to the extent that such documents are included in the fields searched

| | | | |
|---|---|---|---|
| Jitsuyo Shinan Koho | 1922–1996 | Jitsuyo Shinan Toroku Koho | 1996–2011 |
| Kokai Jitsuyo Shinan Koho | 1971–2011 | Toroku Jitsuyo Shinan Koho | 1994–2011 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>A | JP 2008-123462 A  (Hitachi, Ltd.),<br>29 May 2008 (29.05.2008),<br>claims 2, 3; paragraph [0091]; fig. 1 to 4<br>& US 2008/0136612 A1 | 1,7-9<br>2,11 |
| A | JP 2009-085651 A  (Hitachi, Ltd.),<br>23 April 2009 (23.04.2009),<br>entire text<br>(Family: none) | 1,2,7-9,11 |

☐ Further documents are listed in the continuation of Box C.    ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>    19 April, 2011 (19.04.11) | Date of mailing of the international search report<br>    26 April, 2011 (26.04.11) |
|---|---|
| Name and mailing address of the ISA/<br>    Japanese Patent Office | Authorized officer |
| Facsimile No. | Telephone No. |

Form PCT/ISA/210 (second sheet) (July 2009)

**INTERNATIONAL SEARCH REPORT**

| International application No. |
| --- |
| PCT/JP2011/000416 |

---

**Box No. II    Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

---

**Box No. III    Observations where unity of invention is lacking (Continuation of item 3 of first sheet)**

This International Searching Authority found multiple inventions in this international application, as follows:
The invention of claim 1 is not admitted to involve any novelty to and any special technical feature over the invention disclosed in JP 2008-123462 A.
Hence, it is apparent that the inventions of claims 1-15 do not comply with the requirement of unity of invention.
It is admitted that the dependent claims of claim 1 contain the three inventions which are correlated in the individual special technical features, as follows, if the special technical features are decided at the time of ordering an additional fee payment. However, the international search has been made only on invention 1.  (continued to extra sheet)

1. ☐ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☒ No required additional search fees were timely paid by the applicant.   Consequently, this international search report is restricted to the invention first mentioned in the claims; it is covered by claims Nos.:
Claims 1, 2, 7-9 and 11.

**Remark on Protest**        ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (July 2009)

**INTERNATIONAL SEARCH REPORT**

International application No.

PCT/JP2011/000416

Continuation of Box No.III of continuation of first sheet(2)

Here, the inventions of claim 1 having no special technical feature are sorted into invention 1.

(Invention 1)    Invention of claims 1, 2, 7-9 and 11
"A vehicle periphery monitoring device mounted on a vehicle for detecting an obstacle around said vehicle, comprising:
a first data acquisition unit for acquiring the first time-series frame image data which have been taken at a first image pickup unit for acquiring a first region containing the back side of said vehicle;
a second data acquisition unit for acquiring second frame image data of time series, which have been taken at a second image pickup unit for acquiring a second region containing the back side of said vehicle and different from said first region; and
an obstacle estimation processing unit for executing:
a first obstacle estimation processing for estimating a first obstacle existing in said first region, on the basis of said first frame image data which have been acquired at said first data acquisition unit;
a second obstacle estimation processing for estimating a second obstacle existing in said second region, on the basis of said second frame image data which have been acquired at said second data acquisition unit; and
a signal outputting processing for outputting a signal on the basis of at least one of the result of said first obstacle estimation processing and the result of said second obstacle estimation processing,
wherein the condition on said second obstacle estimation processing is changed on the basis of said result of said first obstacle estimation processing (as will be the "constitution A"),
wherein the estimation of said second obstacle is executed on the basis of the result that the comparison is made between a second accumulation value, in which the evaluation values on the obstacle of each of said second frame image data are accumulated for said every second frame image data by using the second accumulating condition, and the second reference value, and
wherein said condition on said second obstacle estimation processing to be changed on the basis of said result of said first obstacle estimation processing contains at least one of said second accumulating condition and said second reference value".
Incidentally, claims 7 and 8 are sorted into invention 1, since an additional search is made unnecessary by the document cited in the notice on the result of the partial international search.

(Invention 2)    Invention of claims 3-5
"Constitution A" and "A vehicle periphery monitoring device, wherein the condition of said first obstacle estimation processing is changed on the basis of said result of said second obstacle estimation processing".

(Invention 3)    Invention of claims 6, 10 and 12-15
"Constitution A" and "A vehicle periphery monitoring device, wherein said first obstacle estimation processing contains an estimation of the moving direction of said first obstacle so that said change of said condition on said second obstacle estimation processing is executed when said moving direction contains a direction from said first region to said second region".

**EP 2 557 550 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010089344 A
- JP 2004246436 A